# EUROPEAN PATENT APPLICATION

(11) **EP 4 787 096 A1**
(43) Date of publication of application: **05.08.2026**
(21) Application number: 26155418.2
(22) Date of filing: 30.01.2026
(51) Int. Cl.: G05B 19/418, G07C 9/00, H04L 9/40, H04W 12/08, H04W 12/06, H04W 12/069

(54) **SIGNAL ROUTING METHOD FOR A BUILDING MANAGEMENT SYSTEM**

(30) Priority: 04.02.2025 EP 25155865
(71) Applicant: dormakaba Schweiz AG, 8623 Wetzikon (CH)
(72) Inventor: DUETSCHLER, Urs, Wetzikon (CH); MELI, Louis Marcel, Kuesnacht (CH)
(74) Representative: Balder IP Law, S.L.

(57) **Abstract**

According to a first aspect of the present invention, it may be provided a computer-implemented signal routing method for a building management system, hereinafter referred to as BMS, the BMS preferably being an access control system. The BMS may comprise a decision BMS-point, a plurality of signal-forwarding BMS-points, a plurality of enforcement BMS-points, and a plurality of action BMS-points, preferably each of the action BMS-points being associated with at least one of the plurality of enforcement BMS-points. It may be provided that each enforcement BMS-point is configured to cause operation of at least one action BMS-point, preferably the operation including unlocking an access point. The method may comprise obtaining, by the decision BMS-point, respective statuses of the signal-forwarding BMS-points. The method may further comprise determining, by the decision BMS-point, a target enforcement BMS-point configured to cause operation of a target action BMS-point. It may be provided that the method comprises selecting, by the decision BMS-point and based on the statuses of the signal-forwarding BMS-points and based on the target enforcement BMS-point, a signal route comprising at least a first signal-forwarding BMS-point, the signal route providing a signal path between the decision BMS-point and the target enforcement BMS-point. The method may further comprise sending, by the decision BMS-point, a first signal designated to the first signal-forwarding BMS-point of the signal route. It may be provided that the first signal comprises an instruction for the target enforcement BMS-point.

## Description

### FIELD OF THE INVENTION

The present invention relates to the field of building management systems (BMS), and more particularly to access control systems within such building management systems. Specifically, the invention pertains to a computer-implemented signal routing method for managing and controlling access points within a building, utilizing a network of decision points, signal-forwarding points, enforcement points, and action points. The invention also encompasses the integration of energy-efficient technologies and decentralized communication protocols to enhance the reliability and autonomy of access control systems.

### BACKGROUND OF THE INVENTION

In the field of building management systems (BMS), particularly those incorporating access control functionalities, it is common to employ centralized systems that manage various technical functions such as access control, HVAC, lighting, and security. These systems often rely on a network of interconnected devices that communicate with a central server to execute control commands. Known systems typically involve a central access rights server to which each access control terminal is connected. This topology, while effective in managing access, presents significant challenges, including high installation costs due to extensive wiring and the risk of a single point of failure.

Traditional access control methods often rely on proximity-based technologies such as RFID or magnetic stripe cards, which require close contact with a reader. While these methods provide a basic level of security, they are limited by their need for physical proximity and are susceptible to wear and tear. More advanced systems have introduced biometric identification technologies, such as fingerprint and facial recognition, to enhance security. However, these technologies can be unreliable due to environmental factors and privacy concerns, and they consume significant energy, which is a drawback for battery-operated devices.

Despite the substantial advances in the field of access control, there remains a need for systems that are both energy-efficient and capable of operating independently of a central power grid. Current solutions often require constant communication with a central server, leading to increased energy consumption and maintenance requirements. Furthermore, the integration of energy harvesting technologies, such as solar cells, into access control systems is still in its infancy, limiting the deployment of truly autonomous systems.

Another challenge faced by existing BMS is the efficient routing and forwarding of signals within the network. Traditional systems often struggle with signal interference and the need for robust communication protocols to ensure reliable operation. This is particularly critical in environments where multiple devices must communicate seamlessly to maintain security and operational efficiency.

It is therefore a technical problem underlying the present invention to provide a building management system that at least partially overcomes the disadvantages of known systems by offering an energy-efficient, decentralized approach to signal routing and access control.

### SUMMARY OF THE INVENTION

According to the present invention, the above-mentioned objects are addressed through the features of the independent claims. In addition, further advantageous embodiments follow from the dependent claims and the description.

According to a first aspect of the present invention, it may be provided a computer-implemented signal routing method for a building management system, hereinafter referred to as BMS, the BMS preferably being an access control system. The BMS may comprise a decision BMS-point, a plurality of signal-forwarding BMS-points, a plurality of enforcement BMS-points, and a plurality of action BMS-points, preferably each of the action BMS-points being associated with at least one of the plurality of enforcement BMS-points. It may be provided that each enforcement BMS-point is configured to cause operation of at least one action BMS-point, preferably the operation including unlocking an access point. The method may comprise obtaining, by the decision BMS-point, respective statuses of the signal-forwarding BMS-points. The method may further comprise determining, by the decision BMS-point, a target enforcement BMS-point configured to cause operation of a target action BMS-point. It may be provided that the method comprises selecting, by the decision BMS-point and based on the statuses of the signal-forwarding BMS-points and based on the target enforcement BMS-point, a signal route comprising at least a first signal-forwarding BMS-point, the signal route providing a signal path between the decision BMS-point and the target enforcement BMS-point. The method may further comprise sending, by the decision BMS-point, a first signal designated to the first signal-forwarding BMS-point of the signal route. It may be provided that the first signal comprises an instruction for the target enforcement BMS-point.

Throughout the present disclosure, the term "Building Management System" (BMS) may refer to an integrated system designed to manage and control various functions within a building, such as access control, HVAC, lighting, and security. The BMS may be configured to optimize the operation of these functions to enhance energy efficiency and security. For example, a BMS may include components that monitor and control the temperature and lighting levels within a building to maintain comfort while minimizing energy consumption. In the context of the present invention, the BMS preferably includes an access control system, which may manage the entry and exit of individuals through various access points within the building.

Throughout the present disclosure, the term "access control system" may refer to a subsystem of the Building Management System (BMS) that is specifically designed to manage and regulate access to different areas within a building. This system may include various components such as card readers, biometric scanners, and electronic locks that control access points like doors and gates. The access control system may be integrated with other security measures to ensure that only authorized individuals can enter restricted areas. For example, an access control system may utilize RFID technology to allow entry to employees with valid credentials while denying access to unauthorized visitors.

Throughout the present disclosure, the term "decision BMS-point" may refer to a central processing unit or node within the Building Management System (BMS) that is responsible for making decisions regarding the routing of signals and the operation of various components within the system. The decision BMS-point may process data received from other points in the system, such as signal-forwarding and enforcement BMS-points, to determine the most efficient and effective course of action. For instance, the decision BMS-point may analyze the status of signal-forwarding BMS-points to select an optimal signal route for communication with a target enforcement BMS-point.

Throughout the present disclosure, the term "signal-forwarding BMS-points" may refer to nodes within the Building Management System (BMS) that are responsible for relaying signals between the decision BMS-point and other points within the system. These points may be strategically placed throughout the building to ensure robust communication and signal coverage. Signal-forwarding BMS-points may include wireless transceivers or wired connections that facilitate the transmission of data. For example, a signal-forwarding BMS-point may receive a signal from the decision BMS-point and forward it to an enforcement BMS-point to execute a specific action.

Throughout the present disclosure, the term "enforcement BMS-points" may refer to components within the Building Management System (BMS) that are responsible for executing control commands received from the decision BMS-point. These points may include devices such as electronic locks, actuators, or other mechanisms that enforce access control or other building management functions. An enforcement BMS-point may comprise an action BMS-point, allowing it to perform multiple roles within the system. For instance, an enforcement BMS-point may unlock a door or activate a security alarm based on instructions received from the decision BMS-point.

Throughout the present disclosure, the term "action BMS-points" may refer to devices or apparatuses within the Building Management System (BMS) that are configured to perform specific building management functions. These functions may include providing or allowing access, controlling HVAC systems, or managing lighting and shading. An action BMS-point may be associated with one or more enforcement BMS-points, enabling it to execute commands such as unlocking a door, enabling a manual unlocking of the door, or adjusting the temperature. For example, an action BMS-point may be a smart thermostat that regulates heating and cooling based on instructions from the decision BMS-point. In another example, the action-BMS point corresponds to a electronic fittings or electronic cylinder. The execution of the command may lead to a coupling of a lock to a manual input device of the action BS-point, such as a handle or a knob, for manually unlocking the door. Alternatively or additionally, the execution of the command may lead to a unlocking of a rotor of the action-BMS-point, wherein manual rotation of the rotor may lead to an unlocking of the door.

Throughout the present disclosure, the term "signal route" may refer to a predefined path within the Building Management System (BMS) through which signals are transmitted from the decision BMS-point to a target enforcement BMS-point. This route may include one or more signal-forwarding BMS-points that relay the signal to ensure it reaches its intended destination. The signal route may be dynamically selected based on the current status of the signal-forwarding BMS-points to optimize communication efficiency and reliability. For example, the decision BMS-point may choose a signal route that minimizes interference and maximizes signal strength.

Throughout the present disclosure, the term "first signal" may refer to an initial communication transmitted by the decision BMS-point to a signal-forwarding BMS-point within the Building Management System (BMS). This signal may contain instructions for a target enforcement BMS-point, directing it to perform a specific action. The first signal may be encoded with data that identifies the intended recipient and the action to be executed. For instance, the first signal may instruct an enforcement BMS-point to unlock a door or activate an alarm system.

Throughout the present disclosure, the term "target enforcement BMS-point" may refer to a specific enforcement BMS-point within the Building Management System (BMS) that has been identified by the decision BMS-point to execute a particular action. The target enforcement BMS-point may be selected based on various criteria, such as its proximity to a target action BMS-point or its current operational status. It may be different from or not comprised in the first signal-forwarding BMS-point. For example, the decision BMS-point may determine a target enforcement BMS-point to unlock a door in response to an access request.

Throughout the present disclosure, the term "target action BMS-point" may refer to a specific action BMS-point within the Building Management System (BMS) that is intended to perform a designated building management function. This point may be associated with a target enforcement BMS-point, which facilitates the execution of the desired action. The target action BMS-point may include devices such as door locks, HVAC controls, or lighting systems. For instance, a target action BMS-point may be a door lock that is unlocked by a target enforcement BMS-point upon receiving an instruction from the decision BMS-point.

Throughout the present disclosure, the expression "obtaining respective statuses" may refer to the process by which the decision BMS-point collects information about the current operational state of the signal-forwarding BMS-points within the Building Management System (BMS). This process may include determining a prediction value or receiving a measured value, with the latter potentially being performed periodically. The statuses may provide insights into factors such as energy levels, connectivity, and operational readiness. For example, the decision BMS-point may obtain respective statuses by polling signal-forwarding BMS-points for their current energy levels and communication capabilities.

Throughout the present disclosure, the term "associated" may refer to the relationship between different components within the Building Management System (BMS), indicating that they are linked or connected in a manner that allows them to function together. For example, an action BMS-point may be associated with one or more enforcement BMS-points, meaning that the enforcement BMS-points can trigger the action BMS-point to perform its designated function. This association may be established through physical connections, such as wiring, or through logical connections, such as software configurations.

Throughout the present disclosure, the term "access point" may refer to a physical barrier or entryway within a building that is controlled by the Building Management System (BMS) to regulate access. Access points may include doors, gates, turnstiles, or other barriers that can be locked or unlocked to permit or restrict entry. An access point may also comprise a lock of a postbox, parcel box, or lockable piece of furniture. For instance, an access point may be a door equipped with an electronic lock that is controlled by the BMS to allow entry to authorized individuals.

Throughout the present disclosure, the term "statuses of the signal-forwarding BMS points" may refer to the current operational conditions of the signal-forwarding BMS-points within the Building Management System (BMS). These statuses may include information about energy levels, connectivity, and readiness to forward signals. The decision BMS-point may use these statuses to determine the optimal signal route for communication with enforcement BMS-points. For example, a signal-forwarding BMS-point with a low energy level may be bypassed in favor of a point with higher energy reserves.

Throughout the present disclosure, the expression "determining a target enforcement BMS-point" may refer to the process by which the decision BMS-point identifies a specific enforcement BMS-point within the Building Management System (BMS) to execute a desired action. This determination may be based on various factors, such as receiving a request signal, position tracking, or previously operated action points. The decision BMS-point may also consider the target action BMS-point when determining the target enforcement BMS-point. For instance, the decision BMS-point may select a target enforcement BMS-point that is best positioned to unlock a specific door based on an access request.

Throughout the present disclosure, the term "instruction" may refer to a command or directive issued by the decision BMS-point within the Building Management System (BMS) to an enforcement BMS-point, directing it to perform a specific action. This instruction may be encoded within a signal transmitted through the system and may include details about the action to be executed. For example, an instruction may direct an enforcement BMS-point to unlock a door, activate an alarm, or adjust the settings of an HVAC system. Instructions may be tailored to the capabilities of the target enforcement BMS-point and the requirements of the building management function.

One of the significant technical advantages of the present invention is the decentralized control achieved through the use of a decision BMS-point and multiple signal-forwarding BMS-points. In traditional building management systems, a central server often manages all control functions, leading to a single point of failure. If the central server fails, the entire system may become inoperative, compromising security and functionality. By contrast, the present invention distributes control across various points within the system. The decision BMS-point makes routing decisions based on the statuses of signal-forwarding BMS-points, ensuring that control is not reliant on a single component. This decentralized approach enhances the robustness and reliability of the system, as the failure of one point does not incapacitate the entire network. For example, if a signal-forwarding BMS-point fails, the decision BMS-point can reroute signals through alternative points, maintaining continuous operation and security.

The present invention offers significant energy efficiency advantages by obtaining respective statuses of the signal-forwarding BMS-points and optimizing signal routing accordingly. **In** many building management systems, components such as signal-forwarding points are often battery-operated, making energy conservation crucial. The decision BMS-point collects data on the energy levels and operational statuses of signal-forwarding BMS-points, allowing it to select routes that minimize energy consumption. For instance, the decision BMS-point may avoid routing signals through points with low energy levels, thereby extending the operational life of these components. Additionally, by periodically obtaining status updates, the system can predict and manage energy usage more effectively, ensuring that all points remain functional for longer periods without the need for frequent maintenance or battery replacements.

The modular design of the Building Management System (BMS) in the present invention provides a high degree of scalability, allowing it to be easily customized and expanded to meet the specific needs of different buildings. The system comprises distinct decision, signal-forwarding, enforcement, and action points, each of which can be added or reconfigured as needed. This modularity enables building managers to scale the system up or down based on the size and complexity of the building. For example, additional signal-forwarding BMS-points can be installed to cover larger areas or to enhance communication reliability in buildings with complex layouts. Similarly, new enforcement and action points can be integrated to manage additional access points or building management functions. This scalability ensures that the system can grow and adapt to changing requirements without the need for a complete overhaul.

The ability to determine a target enforcement BMS-point and send specific instructions significantly enhances the security of the Building Management System (BMS). Traditional access control systems often rely on fixed routes and predefined actions, which can be predictable and vulnerable to exploitation. In contrast, the present invention dynamically selects target enforcement BMS-points based on real-time data, ensuring that only authorized actions are performed at access points. For example, when an access request is received, the decision BMS-point evaluates the statuses of signal-forwarding BMS-points and selects the most secure and efficient route to the target enforcement BMS-point. This point then executes the specific instruction, such as unlocking a door, based on the received signal. By tailoring actions to current conditions and specific requests, the system minimizes the risk of unauthorized access and enhances overall security.

The selection of a signal route based on the statuses of signal-forwarding BMS-points ensures improved communication reliability within the Building Management System (BMS). In environments with multiple devices and potential sources of interference, maintaining reliable communication is critical. The present invention addresses this challenge by continuously monitoring the operational statuses of signal-forwarding BMS-points, including factors such as energy levels and connectivity. The decision BMS-point uses this information to select the most reliable signal route, avoiding points with connectivity issues or low energy reserves. For instance, if a signal-forwarding BMS-point is experiencing interference or has a low battery, the decision BMS-point can reroute signals through alternative points to maintain robust communication. This dynamic routing capability ensures that signals are transmitted efficiently and reliably, reducing the likelihood of communication failures and enhancing the overall performance of the system.

It may be provided that the method comprises the feature that the first signal comprises the signal route. It may be further provided that the signal route is included within the first signal, allowing the decision BMS-point to communicate the specific path that the signal should follow to reach the target enforcement BMS-point.

One of the significant technical advantages of including the signal route within the first signal is enhanced routing precision. By explicitly defining the path that the signal should follow, the decision BMS-point ensures that the instructions are routed accurately through the designated signal-forwarding BMS-points to the target enforcement BMS-point. This precision reduces the likelihood of miscommunication or signal loss, as each signal-forwarding BMS-point along the route knows exactly where to forward the signal next. For example, in a complex building layout with multiple potential signal paths, the inclusion of the signal route within the first signal ensures that the signal takes the most efficient and reliable path, avoiding points with connectivity issues or low energy levels. This precise routing capability enhances the overall reliability and performance of the Building Management System (BMS).

Another technical advantage of including the signal route within the first signal is the reduction in processing load on intermediate signal-forwarding BMS-points. In traditional systems, each signal-forwarding point may need to determine the next hop for the signal based on its own routing algorithms and status information. This process can be computationally intensive and may introduce delays, especially in systems with limited processing power. By contrast, the present invention offloads this routing decision to the decision BMS-point, which includes the entire signal route within the first signal. As a result, intermediate signal-forwarding BMS-points simply follow the predefined route without needing to perform additional processing. This reduction in processing load allows signal-forwarding BMS-points to operate more efficiently and conserves their energy, which is particularly beneficial for battery-operated devices. For instance, a signal-forwarding BMS-point can quickly forward the signal to the next point in the route, ensuring timely and reliable communication within the BMS.

It may be provided that the method comprises obtaining respective statuses of the signal-forwarding BMS-points, which includes one or more of the following features. It may be further provided that at least part, preferably all, of the plurality of signal-forwarding BMS-points send respective status signals in periodic time intervals, wherein the sending of the respective status signals is performed in response to the decision BMS-point requesting the respective status signals. It may also be provided that the decision BMS-point predicts the status, in particular the energy level, of the signal-forwarding BMS-points, preferably during time periods when no status signal from the respective signal-forwarding BMS-points is received. Additionally, it may be provided that the decision BMS-point interprets an absence of status signals of a respective signal-forwarding BMS-point for a period of time exceeding a threshold as an indication of a malfunction of the respective signal-forwarding BMS-point.

One of the significant technical advantages of obtaining status signals in periodic time intervals is proactive system monitoring. By requesting and receiving status signals from at least part, preferably all, of the plurality of signal-forwarding BMS-points at regular intervals, the decision BMS-point can continuously monitor the operational health of these points. This proactive approach ensures that any potential issues, such as connectivity problems or low energy levels, are detected early before they escalate into more significant problems. For example, if a signal-forwarding BMS-point consistently reports low energy levels, the decision BMS-point can take preemptive measures, such as rerouting signals through alternative points or scheduling maintenance for the affected point. This continuous monitoring enhances the overall reliability and performance of the Building Management System (BMS) by ensuring that all components are functioning optimally.

Another technical advantage of the present invention is the ability of the decision BMS-point to predict the energy level of signal-forwarding BMS-points, particularly during periods when no status signal is received. This predictive capability allows the system to optimize signal routing based on anticipated energy levels, conserving energy and extending the operational life of battery-operated devices. For instance, during times when status signals are not available, the decision BMS-point can use historical data and predictive algorithms to estimate the current energy levels of signal-forwarding BMS-points. This information enables the decision BMS-point to select signal routes that avoid points with potentially low energy, ensuring that signals are transmitted efficiently without depleting the energy reserves of any single point. By managing energy consumption in this manner, the system can reduce the frequency of battery replacements and maintenance, enhancing overall efficiency and sustainability.

The ability to interpret the absence of status signals as an indication of malfunction provides a crucial technical advantage in maintaining the reliability of the Building Management System (BMS). When a signal-forwarding BMS-point fails to send status signals for a period of time exceeding a predefined threshold, the decision BMS-point can infer that the point may be experiencing a malfunction. This prompt detection allows the system to quickly identify and address issues, minimizing downtime and ensuring continuous operation. For example, if a signal-forwarding BMS-point stops sending status signals due to a hardware failure or connectivity issue, the decision BMS-point can reroute signals through alternative points and generate an alert for maintenance personnel to investigate and resolve the problem. This rapid response capability helps maintain the integrity and functionality of the BMS, ensuring that all components work together seamlessly to manage building operations effectively.

**It** may be provided that the method comprises the feature wherein the BMS is configured to interact with an authentication medium, optionally being a mobile device or a physical key card. It may be further provided that the method comprises receiving, by the decision BMS-point from an authentication device, a request, wherein the request includes an indication of a user's intent to operate a target action BMS-point and/or includes authentication information. It may also be provided that the method comprises determining, by the decision BMS-point and based on the request, the first signal. Optionally, it may be provided that prior to sending the first signal, a validity of the authentication information is determined by the decision BMS-point, and wherein sending the first signal is only performed upon determining that the authentication information is valid.

Throughout the present disclosure, the term "authentication medium" may refer to any device or object used to verify the identity of a user within the Building Management System (BMS). This medium may include electronic devices or physical objects that store or transmit authentication information. Examples of authentication media may include mobile devices, such as smartphones or tablets, which can communicate with the BMS via wireless protocols, or physical key cards that contain embedded chips or magnetic strips. The authentication medium may be used to initiate access requests or other interactions with the BMS, ensuring that only authorized users can perform certain actions.

Throughout the present disclosure, the term "authentication device" may refer to a component within the Building Management System (BMS) that interacts with the authentication medium to verify a user's identity. This device may include hardware and software components that read or receive authentication information from the medium and communicate with the decision BMS-point. For example, an authentication device may be a card reader that scans a physical key card or a wireless receiver that connects to a mobile device via Bluetooth or NFC. The authentication device plays a crucial role in ensuring that only authorized users can access or control specific functions within the BMS.

Throughout the present disclosure, the term "authentication information" may refer to data or credentials used to verify the identity of a user within the Building Management System (BMS). This information may include passwords, PINs, biometric data, or unique identifiers stored on an authentication medium. Authentication information is used by the decision BMS-point to determine whether a user is authorized to perform a specific action, such as accessing a restricted area or controlling a building management function. For example, authentication information may include a digital certificate stored on a mobile device or a unique code embedded in a physical key card.

Throughout the present disclosure, the expression "user's intent to operate" may refer to the indication provided by a user to perform a specific action or control a particular function within the Building Management System (BMS). This intent may be communicated through an authentication medium, such as a mobile device or key card, and may include details about the desired operation, such as unlocking a door or adjusting the temperature. The user's intent to operate is a critical component of the request received by the decision BMS-point, guiding the system in determining the appropriate action to take. For instance, a user's intent to operate may be indicated by selecting a specific option on a mobile app or presenting a key card at a reader.

Throughout the present disclosure, the expression "validity of the authentication information" may refer to the process of verifying that the authentication information provided by a user is accurate and corresponds to an authorized identity within the Building Management System (BMS). This process may involve checking the credentials against a database of authorized users or validating the integrity of the data received from the authentication medium. The decision BMS-point performs this validation to ensure that only legitimate requests are processed and that unauthorized access is prevented. For example, the validity of the authentication information may be determined by comparing a user's biometric data with stored records or verifying a digital signature on a mobile device.

One of the significant technical advantages of the present invention is enhanced security, achieved through the interaction with an authentication medium and the verification of the validity of authentication information. By requiring users to present valid authentication information, such as a password, biometric data, or a digital certificate, the Building Management System (BMS) ensures that only authorized individuals can access or control specific functions. This verification process is crucial in preventing unauthorized access and protecting sensitive areas within a building. For example, when a user attempts to unlock a secure door using a mobile device, the decision BMS-point verifies the validity of the authentication information before granting access. This additional layer of security reduces the risk of unauthorized entry and enhances the overall safety of the building.

The use of mobile devices or key cards as authentication media provides a user-friendly means of interacting with the Building Management System (BMS). These devices are familiar to most users and offer a convenient way to authenticate and request access to various building functions. For instance, a user can simply tap a key card on a reader or use a mobile app to unlock a door, eliminating the need for complex procedures or manual key entry. This ease of use enhances the user experience and encourages compliance with security protocols. Additionally, mobile devices can support advanced features such as biometric authentication, further streamlining the access control process while maintaining high security standards.

The ability to receive and process a user's intent to operate allows the Building Management System (BMS) to dynamically respond to user requests, providing tailored control over building management functions. By understanding the specific actions a user wishes to perform, the decision BMS-point can determine the appropriate first signal and execute the desired operation efficiently. For example, if a user indicates an intent to adjust the temperature in a conference room, the decision BMS-point can immediately send the necessary instructions to the HVAC system. This dynamic response capability enhances the flexibility and responsiveness of the BMS, allowing it to adapt to changing user needs and preferences in real-time. By providing users with precise control over building functions, the system improves overall satisfaction and operational efficiency.

**It** may be provided that the method comprises maintaining, by the decision BMS-point, a list of the statuses. It may be further provided that the method comprises updating, by the decision BMS-point, the list based on at least one of the following: receiving a status signal related to the statuses, and previous operations of sending the first signal to the first signal-forwarding BMS-point of the signal route, and optionally the success/failure thereof. Optionally, it may be provided that the signal route for a specific target enforcement BMS-point is periodically changed in order to not drain energy levels of signal-forwarding BMS-points, the energy levels being part of the statuses.

Throughout the present disclosure, the term "list of the statuses" may refer to a compiled record maintained by the decision BMS-point that includes the current operational conditions of the signal-forwarding BMS-points within the Building Management System (BMS). This list may include various parameters such as energy levels, connectivity status, and operational readiness. The list of the statuses may be updated periodically based on status signals received from the signal-forwarding BMS-points or based on the outcomes of previous signal operations. For example, the list may include versioning of the energy status using time stamps to track changes over time. Additionally, the decision BMS-point may update the energy status by requesting status updates at different intervals depending on factors such as time of day, whether it is a weekend or a working day, and the required accuracy of the current energy statuses. For instance, during peak operational hours, the system may require more frequent and accurate updates, while during off-peak hours, less frequent updates may suffice.

One of the significant technical advantages of maintaining and updating a list of statuses is dynamic status management. By keeping a comprehensive and up-to-date record of the operational conditions of signal-forwarding BMS-points, the decision BMS-point can respond in real-time to changes within the system. This dynamic management ensures that the system remains agile and capable of adapting to varying conditions, such as fluctuations in energy levels or connectivity issues. For example, if a signal-forwarding BMS-point reports a sudden drop in energy levels, the decision BMS-point can quickly reroute signals through alternative points to maintain continuous operation. This real-time responsiveness enhances the overall efficiency and reliability of the Building Management System (BMS).

Another technical advantage of the present invention is optimized signal routing achieved by periodically changing the signal route for specific target enforcement BMS-points. This periodic change helps to distribute energy consumption evenly across all signal-forwarding BMS-points, preventing the depletion of energy levels in any single point. For instance, if a particular signal-forwarding BMS-point is frequently used, its energy levels may deplete faster than others. By periodically adjusting the signal route, the decision BMS-point ensures that no single point is overburdened, thereby extending the operational life of all points and reducing the need for frequent maintenance or battery replacements. This optimization not only conserves energy but also enhances the sustainability and longevity of the BMS.

The ability to consider the success or failure of previous signal operations provides a crucial technical advantage in enhancing the reliability of the Building Management System (BMS). By analyzing the outcomes of past signal transmissions, the decision BMS-point can identify patterns or issues that may affect future operations. For example, if a particular signal route frequently results in communication failures, the decision BMS-point can avoid using that route in the future, opting for more reliable alternatives. This continuous learning and adaptation process helps to minimize the likelihood of communication failures and ensures that signals are transmitted efficiently and accurately. By leveraging historical data to inform routing decisions, the system can maintain high levels of reliability and performance.

It may be provided that the method comprises the feature wherein each signal-forwarding BMS-point comprises an energy storage. It may be further provided that the statuses comprise a respective stored energy information indicating a level of energy stored in the respective signal-forwarding BMS-point. It may also be provided that the decision BMS-point selects the signal route based on the stored energy information of the signal-forwarding BMS-points.

Throughout the present disclosure, the term "energy information" may refer to data or metrics that indicate the current energy status of a signal-forwarding BMS-point within the Building Management System (BMS). This information may include the level of energy stored in the energy storage of the signal-forwarding BMS-point, as well as other relevant parameters such as energy consumption rates and remaining battery life. The energy information may be used by the decision BMS-point to make informed decisions about signal routing. For example, the decision BMS-point may compare the stored energy information with predefined energy level thresholds to determine the most energy-efficient signal route. **If a** signal-forwarding BMS-point's energy level falls below a certain threshold, the decision BMS-point may opt to route signals through alternative points with higher energy reserves, ensuring continuous and reliable communication within the BMS.

One of the significant technical advantages of incorporating energy storage in each signal-forwarding BMS-point and using stored energy information is effective energy management. By continuously monitoring the energy levels of signal-forwarding BMS-points, the decision BMS-point can make informed decisions about signal routing to optimize energy usage. This proactive energy management ensures that all points within the system maintain sufficient energy levels to perform their functions, reducing the risk of unexpected power depletion. For example, if a signal-forwarding BMS-point reports low energy levels, the decision BMS-point can reroute signals through points with higher energy reserves, conserving energy and extending the operational life of the system. This efficient energy management enhances the sustainability and longevity of the Building Management System (BMS).

Another technical advantage of the present invention is efficient signal routing achieved by selecting the signal route based on stored energy information. By considering the energy levels of signal-forwarding BMS-points, the decision BMS-point can choose the most energy-efficient path for signal transmission. This approach minimizes the risk of signal-forwarding BMS-points running out of power during critical operations. For instance, if a particular signal-forwarding BMS-point has low energy reserves, the decision BMS-point can avoid routing signals through that point, opting for alternative routes with higher energy levels. This efficient routing ensures that signals are transmitted reliably and without interruption, maintaining the overall performance and reliability of the BMS.

Monitoring stored energy levels and adjusting signal routes accordingly provides a crucial technical advantage in maintaining consistent communication and preventing disruptions caused by depleted energy reserves. By continuously tracking the energy information of signal-forwarding BMS-points, the decision BMS-point can identify potential issues before they impact system performance. For example, if a signal-forwarding BMS-point's energy level falls below a critical threshold, the decision BMS-point can reroute signals to prevent communication failures. This proactive approach ensures that the BMS remains operational even in challenging conditions, enhancing the overall reliability and robustness of the system. By leveraging stored energy information to inform routing decisions, the system can maintain high levels of performance and minimize downtime.

**It** may be provided that the method comprises the feature wherein each signal-forwarding BMS-point comprises energy harvesting means. It may be further provided that the method comprises harvesting energy, by the energy harvesting means, and providing the harvested energy to the signal-forwarding BMS-point. Preferably, it may be provided that the energy harvesting means comprise a solar cell and/or a motion-energy based energy generator. Preferably, it may also be provided that each signal-forwarding BMS-point is not connected to a power grid.

One of the significant technical advantages of incorporating energy harvesting means in each signal-forwarding BMS-point is energy autonomy. By enabling each point to generate its own power, the Building Management System (BMS) reduces its dependency on external power sources, such as the power grid. This autonomy ensures that signal-forwarding BMS-points can continue to operate even in the event of a power outage or in locations where grid access is limited or unavailable. For example, a signal-forwarding BMS-point equipped with a solar cell can harness sunlight to generate electricity, providing a continuous power supply during daylight hours. Similarly, a motion-energy based energy generator can convert kinetic energy from building vibrations or occupant movements into electrical energy. This self-sufficiency enhances the reliability and resilience of the BMS, ensuring uninterrupted operation under various conditions.

Utilizing renewable energy sources such as solar cells and motion-energy based energy generators contributes to the sustainability of the Building Management System (BMS). By harnessing clean and renewable energy, the system minimizes its environmental impact and reduces its carbon footprint. For instance, solar cells capture sunlight and convert it into electricity without emitting greenhouse gases, making them an environmentally friendly power source. Motion-energy based generators similarly provide a sustainable energy solution by converting mechanical energy into electricity without relying on fossil fuels. This focus on sustainability aligns with global efforts to reduce energy consumption and promote the use of renewable resources. By integrating energy harvesting technologies, the BMS not only enhances its operational efficiency but also supports broader environmental goals.

The ability to operate without a connection to the power grid provides significant installation flexibility for the Building Management System (BMS). Signal-forwarding BMS-points that are not tethered to the grid can be placed in a wide range of locations, accommodating various building layouts and architectural designs. This flexibility allows for the strategic placement of signal-forwarding BMS-points to optimize communication coverage and system performance. For example, in historic buildings or remote locations where grid access is challenging, the use of energy harvesting technologies enables the installation of BMS components without the need for extensive wiring or infrastructure modifications. This adaptability makes the BMS suitable for a diverse array of applications, from modern office buildings to off-grid facilities, enhancing its utility and appeal across different sectors.

It may be provided that the method further comprises receiving, by the first signal-forwarding BMS-point of the signal route, the first signal. It may be further provided that the method comprises performing signal forwarding, which includes sending, by the first signal-forwarding BMS-point, a second signal based on the first signal, the second signal comprising the instruction for the target enforcement BMS-point.

One of the significant technical advantages of the method is improved signal transmission. By receiving the first signal and forwarding a second signal, the first signal-forwarding BMS-point ensures that instructions are reliably transmitted to the target enforcement BMS-point. This two-step process helps to mitigate the risk of signal loss or interference that can occur during transmission. For example, in environments with high levels of electromagnetic interference or physical obstructions, the ability to forward signals ensures that the communication path remains intact and that the intended instructions reach their destination. This reliable transmission capability is crucial for maintaining the integrity and functionality of the Building Management System (BMS), particularly in security-sensitive applications where precise control over access points is essential.

The process of signal forwarding enhances communication efficiency within the Building Management System (BMS). By allowing the first signal-forwarding BMS-point to send a second signal based on the first signal, the system streamlines the communication process, ensuring that instructions are accurately relayed through the network. This efficiency reduces the need for redundant signal transmissions and minimizes communication delays, enabling the BMS to respond quickly to user requests and environmental changes. For instance, when a user initiates an access request, the decision BMS-point can promptly send the first signal to the appropriate signal-forwarding BMS-point, which then forwards the second signal to execute the desired action. This efficient communication flow enhances the overall responsiveness and performance of the BMS.

The ability to perform signal forwarding supports a scalable network architecture within the Building Management System (BMS). By facilitating the relay of signals through multiple points, the system can easily expand and adapt to accommodate larger or more complex building layouts. This scalability is particularly beneficial in multi-story buildings or facilities with extensive floor plans, where direct communication between the decision BMS-point and target enforcement BMS-points may not be feasible. By leveraging signal forwarding, the BMS can maintain robust communication coverage across all areas of the building, ensuring that all components remain interconnected and operational. This scalable architecture allows the BMS to grow and evolve alongside the building's needs, providing a flexible and future-proof solution for building management.

**It** may be provided that the method comprises the feature wherein the first signal comprises designation information indicating the first signal-forwarding BMS-point and/or a designated receiver of the second signal.

One of the significant technical advantages of including designation information in the first signal is precise signal routing. By clearly indicating the first signal-forwarding BMS-point and/or the designated receiver of the second signal, the method ensures that signals are routed accurately through the Building Management System (BMS). This precise routing capability is crucial for maintaining the integrity and efficiency of the system, particularly in complex building layouts with multiple signal-forwarding points. For example, when the first signal contains specific designation information, each signal-forwarding BMS-point along the route can quickly and accurately forward the signal to the next designated point, ensuring that the instructions reach the target enforcement BMS-point without delay or misdirection. This precision enhances the overall performance and reliability of the BMS.

Another technical advantage of the present invention is the reduction of routing errors achieved by specifying the intended recipients within the signal. By including designation information in the first signal, the method minimizes the likelihood of signals being misrouted or sent to incorrect destinations. This reduction in routing errors is particularly important in security-sensitive applications where accurate signal transmission is essential. For instance, if the first signal clearly identifies the designated receiver of the second signal, the risk of the signal being intercepted or misdirected is significantly reduced. This accuracy ensures that the intended actions, such as unlocking a door or activating an alarm, are performed correctly and securely, enhancing the overall effectiveness of the BMS.

The inclusion of designation information in the first signal enhances communication clarity within the Building Management System (BMS). By providing explicit details about the intended recipients, the method facilitates efficient and accurate signal transmission. This clarity is particularly beneficial in environments with high levels of signal traffic or potential interference. For example, when the first signal includes designation information, each signal-forwarding BMS-point can quickly identify its role in the signal transmission process, reducing the need for additional processing or decision-making. This streamlined communication flow ensures that signals are transmitted smoothly and efficiently, minimizing delays and enhancing the overall responsiveness of the BMS. By improving communication clarity, the system can maintain high levels of performance and reliability, even in challenging conditions.

**It** may be provided that the method comprises the feature wherein sending the second signal is performed under the condition that no other signal corresponding to the first signal was received by the first signal-forwarding BMS-point within a predetermined time period before receiving the first signal.

One of the significant technical advantages of the method is the prevention of signal redundancy. By ensuring that the second signal is only sent if no corresponding signal was received by the first signal-forwarding BMS-point within a predetermined time period, the method effectively prevents redundant signal transmissions. This redundancy prevention is crucial for conserving system resources, such as bandwidth and processing power. For example, in a busy Building Management System (BMS) with multiple signals being transmitted simultaneously, the ability to avoid sending duplicate signals ensures that the system operates efficiently without unnecessary signal traffic. This conservation of resources enhances the overall performance and responsiveness of the BMS, allowing it to handle more tasks and user requests effectively.

Another technical advantage of the present invention is the reduction of signal congestion within the Building Management System (BMS). By conditionally sending the second signal only when no corresponding signal was received within a predetermined time period, the method helps to minimize the accumulation of signals within the network. This reduction in signal congestion is particularly important in environments with high levels of communication traffic, where excessive signals can lead to delays and potential communication failures. For instance, by preventing duplicate signals, the system ensures that the communication channels remain clear and available for new signals, facilitating smooth and efficient signal transmission. This reduction in congestion enhances the overall communication efficiency of the BMS, ensuring timely and accurate execution of building management functions.

The method also improves system reliability by avoiding duplicate signal transmissions. By ensuring that only necessary signals are processed and forwarded, the system reduces the risk of errors and inconsistencies that can arise from handling redundant signals. For example, if multiple identical signals were to be transmitted simultaneously, it could lead to conflicting actions or confusion within the system. By conditionally sending the second signal based on the absence of a corresponding signal, the method ensures that each signal is unique and relevant, maintaining the integrity and reliability of the BMS. This reliability is crucial for maintaining consistent and accurate control over building management functions, particularly in security-sensitive applications where precise signal transmission is essential.

**It** may be provided that the method further comprises receiving, by the target enforcement BMS-point, the second signal. **It** may be further provided that the method comprises causing, by the target enforcement BMS-point, operation of the target action BMS-point according to the instruction of the second signal. Preferably, it may be provided that the target action BMS-point comprises an actuator and a lock.

One of the significant technical advantages of the method is the direct execution of instructions. By receiving the second signal and causing the operation of the target action BMS-point, the target enforcement BMS-point ensures that instructions are executed immediately and accurately. This direct execution enhances the responsiveness of the Building Management System (BMS), allowing it to quickly adapt to user requests and environmental changes. For example, when a user initiates an access request, the target enforcement BMS-point can promptly receive the second signal and execute the desired action, such as unlocking a door or activating an alarm. This immediate response capability is crucial for maintaining the efficiency and effectiveness of the BMS, particularly in time-sensitive applications where delays could compromise security or operational performance.

The inclusion of an actuator and a lock in the target action BMS-point provides enhanced security and control over access points within the Building Management System (BMS). By integrating these components, the system ensures that only authorized actions are performed, reducing the risk of unauthorized access or tampering. For instance, the actuator can precisely control the movement of the lock, ensuring that it only operates in response to valid instructions received via the second signal. This precise control enhances the security of access points, preventing unauthorized entry and safeguarding sensitive areas within the building. Additionally, the ability to control access points with such precision allows building managers to implement advanced security protocols, further enhancing the overall safety and security of the facility.

The method ensures reliable operation of action points by clearly defining the roles of the target enforcement BMS-point and the target action BMS-point. By delineating these roles, the system reduces the risk of miscommunication or errors that could arise from ambiguous instructions or overlapping responsibilities. For example, the target enforcement BMS-point is responsible for receiving the second signal and executing the corresponding action, while the target action BMS-point carries out the physical operation, such as unlocking a door. This clear division of responsibilities ensures that each component functions as intended, maintaining the integrity and reliability of the BMS. By providing a structured and organized approach to action point operation, the system can consistently deliver accurate and dependable performance, even in complex or demanding environments.

**It** may be provided that the method comprises the feature wherein each enforcement BMS-point is also a signal-forwarding BMS-point and each signal-forwarding BMS-point is also an enforcement BMS-point.

One of the significant technical advantages of the method is enhanced system flexibility. By allowing each enforcement BMS-point to also function as a signal-forwarding BMS-point and vice versa, the Building Management System (BMS) gains greater flexibility in its operations and configurations. This dual functionality enables the system to adapt to various building layouts and operational requirements without the need for additional specialized components. For example, in a dynamic building environment where the roles of different points may change frequently, the ability of BMS-points to perform both enforcement and signal-forwarding tasks ensures that the system can seamlessly adjust to new configurations. This flexibility enhances the overall adaptability and scalability of the BMS, making it suitable for a wide range of applications and building types.

Another technical advantage of the present invention is improved resource utilization achieved by combining the roles of enforcement and signal-forwarding BMS-points. By integrating these functions into a single component, the system optimizes the use of its resources, reducing the need for additional hardware and simplifying system design. This consolidation of roles minimizes the number of separate devices required, leading to cost savings in both installation and maintenance. For instance, a single BMS-point that can perform both enforcement and signal-forwarding tasks eliminates the need for separate enforcement and signal-forwarding units, streamlining the system architecture. This efficient use of resources enhances the overall cost-effectiveness and manageability of the BMS, making it easier to deploy and maintain.

The dual functionality of BMS-points also increases redundancy and reliability within the Building Management System (BMS). By allowing each point to perform both enforcement and signal-forwarding tasks, the system ensures that communication and control can be maintained even if some points fail. This redundancy is particularly important in critical applications where uninterrupted operation is essential. For example, if an enforcement BMS-point that also functions as a signal-forwarding point experiences a failure, other points in the system can take over its tasks, ensuring that signals continue to be transmitted and actions are executed as required. This built-in redundancy enhances the overall reliability and robustness of the BMS, providing a fail-safe mechanism that maintains system integrity under various conditions.

It may be provided that the method comprises the feature wherein each enforcement BMS-point and/or each signal-forwarding BMS-point is operable in a low-power mode and in an active mode. It may be further provided that each enforcement BMS-point and/or signal-forwarding BMS-point being in the low-power mode is configured to operate at a lower power consumption as compared to a power consumption of the respective enforcement BMS-point and/or signal-forwarding BMS-point being in the active mode. It may also be provided that each enforcement BMS-point and/or signal-forwarding BMS-point comprises a wakeup receiver configured to receive a wakeup signal and an action instruction receiver configured to receive an action instruction signal. It may be further provided that in the low-power mode of the enforcement BMS-point and/or signal-forwarding BMS-point, the action instruction receiver is inactive, and wherein in the active mode, the action instruction receiver is active. **It** may also be provided that the instruction of the first signal comprises a wakeup instruction for the target enforcement BMS-point.

One of the significant technical advantages of the method is energy efficiency. By allowing each enforcement and signal-forwarding BMS-point to operate in a low-power mode, the Building Management System (BMS) conserves energy, which is particularly beneficial for battery-operated devices. In low-power mode, these points consume significantly less energy compared to when they are in active mode. This reduction in power consumption extends the operational life of the devices, reducing the frequency of battery replacements and maintenance. For example, during periods of inactivity or low demand, BMS-points can switch to low-power mode, conserving energy until they are needed for active operations. This energy-efficient approach enhances the sustainability and cost-effectiveness of the BMS, making it suitable for long-term deployment in various building environments.

The ability to switch between low-power and active modes provides dynamic power management within the Building Management System (BMS). This capability allows the system to optimize energy usage based on current operational needs, ensuring that power is used efficiently and effectively. For instance, during peak operational hours or when a specific action is required, BMS-points can transition to active mode to perform their tasks at full capacity. Conversely, during off-peak hours or periods of inactivity, they can revert to low-power mode to conserve energy. This dynamic power management ensures that the system remains responsive and efficient, adapting to changing conditions and demands without compromising performance. By intelligently managing power consumption, the BMS can maintain high levels of operational efficiency while minimizing energy waste.

The inclusion of a wakeup receiver and an action instruction receiver in each enforcement and signal-forwarding BMS-point enhances the responsiveness of the Building Management System (BMS). These components ensure that BMS-points can quickly transition from low-power to active mode in response to specific signals. For example, when a wakeup instruction is included in the first signal, the wakeup receiver activates the BMS-point, allowing it to perform its designated tasks promptly. This rapid transition capability is crucial for maintaining system responsiveness, particularly in time-sensitive applications where delays could impact security or operational performance. By ensuring that BMS-points can quickly respond to wakeup instructions and execute actions as needed, the system maintains high levels of performance and reliability, even in dynamic or demanding environments.

**It** may be provided that the method comprises receiving, by the wakeup receiver of the target enforcement BMS-point being in the low-power mode, the wakeup instruction. It may be further provided that in response to receiving the wakeup instruction, the method comprises switching the target enforcement BMS-point from the low-power mode into the active mode.

One of the significant technical advantages of the method is rapid activation. By enabling the wakeup receiver of the target enforcement BMS-point to receive a wakeup instruction and switch from low-power mode to active mode, the Building Management System (BMS) ensures that the BMS-point can be quickly activated when needed. This rapid activation capability is crucial for maintaining system responsiveness, particularly in scenarios where immediate action is required. For example, when an access request is received, the wakeup instruction can promptly activate the target enforcement BMS-point, allowing it to execute the necessary action, such as unlocking a door or triggering an alarm. This swift transition from low-power to active mode ensures that the BMS can respond effectively to user requests and environmental changes, maintaining high levels of performance and reliability.

The method also provides significant energy conservation benefits. By keeping BMS-points in low-power mode until a wakeup instruction is received, the Building Management System (BMS) optimizes power usage and conserves energy. This approach ensures that BMS-points only consume minimal power during periods of inactivity, extending the operational life of battery-operated devices and reducing the frequency of battery replacements. For instance, during off-peak hours or when no actions are required, BMS-points can remain in low-power mode, conserving energy until they are needed for active operations. This energy-efficient strategy enhances the sustainability and cost-effectiveness of the BMS, making it suitable for long-term deployment in various building environments.

The method improves overall operational efficiency by ensuring that BMS-points are only active when needed. By utilizing wakeup instructions to activate BMS-points, the system minimizes unnecessary power consumption and reduces wear and tear on components. This targeted activation approach ensures that resources are used efficiently, maintaining the system's performance while minimizing operational costs. For example, by activating BMS-points only in response to specific wakeup instructions, the system can focus its resources on executing critical tasks, such as responding to security threats or managing building functions. This efficient use of resources enhances the overall effectiveness and reliability of the BMS, ensuring that it can meet the demands of various applications and environments.

**It** may be provided that the method comprises, after sending the first signal and preferably after expiry of a waiting time, sending, by the decision BMS-point, an action instruction signal, wherein the action instruction signal comprises an instruction for the target enforcement BMS-point to cause an operation of the target action BMS-point. It may be further provided that the active action instruction receiver of the target enforcement BMS-point being in the active mode is configured to receive the action instruction signal and to cause operation of the target action BMS-point according to the instruction of the action instruction signal.

One of the significant technical advantages of the method is sequential instruction execution. By sending an action instruction signal after the first signal and a waiting time, the Building Management System (BMS) ensures that instructions are executed in a precise and orderly manner. This sequential execution enhances the reliability of operations, as each step is performed in the correct order without overlap or confusion. For example, after the first signal is sent to wake up the target enforcement BMS-point, the system waits for a specified period to ensure that the point is fully active before sending the action instruction signal. This approach ensures that the target enforcement BMS-point is ready to receive and execute the action instruction, such as unlocking a door or activating an alarm, without any delays or errors. This precise execution of instructions maintains the integrity and efficiency of the BMS.

The use of a waiting time before sending the action instruction signal allows for better coordination between different BMS-points within the Building Management System (BMS). This waiting time ensures that each point has sufficient time to transition from low-power mode to active mode and prepare for the next instruction. Improved coordination is particularly important in complex building environments where multiple BMS-points need to work together seamlessly. For instance, after the decision BMS-point sends the first signal to wake up the target enforcement BMS-point, the system waits for a predetermined period to ensure that the point is fully active. This coordination ensures that the target enforcement BMS-point is ready to receive the action instruction signal and execute the desired action without any interruptions. By allowing for better coordination, the system can maintain smooth and efficient operations, enhancing overall performance and reliability.

The ability of the active action instruction receiver to receive and execute the action instruction signal ensures that the Building Management System (BMS) can respond promptly to user requests and environmental changes. This enhanced responsiveness is crucial for maintaining high levels of performance and reliability, particularly in time-sensitive applications. For example, when a user initiates an access request, the decision BMS-point sends the first signal to wake up the target enforcement BMS-point. After a brief waiting time, the decision BMS-point sends the action instruction signal, which is received and executed by the active action instruction receiver. This prompt execution of instructions ensures that the system can quickly respond to user requests, such as unlocking a door or adjusting building functions, maintaining high levels of user satisfaction and operational efficiency. By ensuring that BMS-points can rapidly transition from low-power to active mode and execute instructions, the system maintains its responsiveness and effectiveness.

**It** may be provided that the method comprises the feature wherein each enforcement BMS-point comprises a transmitter configured to send an instruction request signal. It may be further provided that the method comprises, after switching the target enforcement BMS-point from the low-power mode into the active mode, sending, by the transmitter of the target enforcement BMS-point being in the active mode, an instruction request signal to the decision BMS-point. **It** may also be provided that the action instruction signal is sent by the decision BMS-point upon receipt of the instruction request signal.

One of the significant technical advantages of the method is confirmation-based communication. By using an instruction request signal, the Building Management System (BMS) ensures that communication between the target enforcement BMS-point and the decision BMS-point is confirmed and reliable. This confirmation-based approach enhances the accuracy of signal transmission, as the decision BMS-point only sends the action instruction signal upon receipt of the instruction request signal. For example, after the target enforcement BMS-point switches from low-power mode to active mode, it sends an instruction request signal to the decision BMS-point, confirming that it is ready to receive further instructions. This confirmation ensures that the action instruction signal is sent at the appropriate time, reducing the risk of miscommunication or signal loss. By verifying readiness before sending critical instructions, the system maintains high levels of reliability and performance.

The use of an instruction request signal also minimizes latency within the Building Management System (BMS). By ensuring that the decision BMS-point sends the action instruction signal only when the target enforcement BMS-point is ready to receive it, the method reduces unnecessary delays in signal transmission. This approach ensures that instructions are executed promptly and efficiently, maintaining the responsiveness of the system. For instance, after the target enforcement BMS-point transitions to active mode, it immediately sends an instruction request signal to the decision BMS-point. Upon receiving this signal, the decision BMS-point promptly sends the action instruction signal, ensuring that the desired action, such as unlocking a door or activating an alarm, is executed without delay. This reduction in latency enhances the overall performance and user experience of the BMS.

The interaction between the target enforcement BMS-point and the decision BMS-point through instruction request signals improves system coordination within the Building Management System (BMS). This coordinated communication ensures that all components work together seamlessly, maintaining synchronized operations. For example, after the target enforcement BMS-point sends an instruction request signal, the decision BMS-point responds by sending the action instruction signal, ensuring that the target enforcement BMS-point is fully prepared to execute the desired action. This synchronized interaction reduces the risk of errors or conflicts, enhancing the overall efficiency and reliability of the system. By ensuring that each component is aware of the other's status and readiness, the BMS can maintain smooth and coordinated operations, even in complex or dynamic environments.

It may be provided that the method comprises the feature wherein one of the signal-forwarding BMS-points comprises the target enforcement BMS-point. Optionally, it may be provided that each enforcement BMS-point is comprised in a signal-forwarding BMS-point.

One of the significant technical advantages of the method is integrated functionality. By having one of the signal-forwarding BMS-points comprise the target enforcement BMS-point, the Building Management System (BMS) integrates multiple functions into a single component. This integration enhances system efficiency by reducing the complexity and number of separate components required. For example, a BMS-point that can perform both signal-forwarding and enforcement tasks simplifies the system architecture, allowing for more streamlined operations. This integrated approach reduces the need for additional wiring and connections, minimizing potential points of failure and improving overall system reliability. By consolidating functions within a single BMS-point, the system can operate more efficiently and effectively, maintaining high levels of performance with fewer resources.

The method also optimizes resource utilization by combining enforcement and signal-forwarding roles within the same BMS-point. This consolidation of roles reduces the need for additional hardware, leading to cost savings in both installation and maintenance. For instance, a single BMS-point that can handle both enforcement and signal-forwarding tasks eliminates the need for separate enforcement and signal-forwarding units, simplifying the system design and reducing the overall footprint. This efficient use of resources enhances the cost-effectiveness and manageability of the BMS, making it easier to deploy and maintain. By optimizing resource utilization, the system can achieve high levels of performance while minimizing operational costs and complexity.

The optional feature of having each enforcement BMS-point comprised in a signal-forwarding BMS-point provides greater flexibility in system configuration. This flexibility allows the Building Management System (BMS) to adapt to various building layouts and operational requirements, supporting adaptable and scalable deployments. For example, in a dynamic building environment where the roles of different points may change frequently, the ability of BMS-points to perform both enforcement and signal-forwarding tasks ensures that the system can seamlessly adjust to new configurations. This flexibility enhances the overall adaptability and scalability of the BMS, making it suitable for a wide range of applications and building types. By providing a flexible and scalable solution, the system can grow and evolve alongside the building's needs, ensuring long-term viability and effectiveness.

**It** may be provided that the decision BMS-point is configured to send the first signal via a first communication channel and via a second communication channel. It may be further provided that each signal-forwarding BMS-point is configured to receive the first signal via the first communication channel and via the second communication channel. It may also be provided that the method comprises selecting, by the decision BMS-point and based on the status of the first signal-forwarding BMS-point of the signal route, at least two communication channels for sending the first signal. It may be further provided that the first signal is sent by the decision BMS-point via the selected at least two communication channels.

One of the significant technical advantages of the method is enhanced communication reliability. By sending the first signal via multiple communication channels, the Building Management System (BMS) ensures that signals are transmitted reliably, reducing the risk of signal loss or interference. This redundancy in communication channels provides a fail-safe mechanism, ensuring that if one channel encounters issues, the signal can still be transmitted via the other channel. For example, if the first communication channel experiences interference or a temporary outage, the second communication channel can continue to transmit the signal, maintaining continuous communication. This enhanced reliability is crucial for maintaining the integrity and performance of the BMS, particularly in environments where reliable communication is essential for security and operational efficiency.

The ability to select communication channels based on the status of the first signal-forwarding BMS-point optimizes signal transmission within the Building Management System (BMS). By evaluating the current status of the signal-forwarding BMS-point, the decision BMS-point can choose the most effective communication channels for sending the first signal. This selection process ensures that signals are transmitted through channels with the best connectivity and least interference, enhancing the overall quality of signal transmission. For instance, if the first signal-forwarding BMS-point indicates that one communication channel has better signal strength or lower interference, the decision BMS-point can prioritize that channel for signal transmission. This optimization ensures that signals are transmitted efficiently and accurately, maintaining high levels of performance and reliability within the BMS.

Utilizing multiple communication channels increases the robustness of the Building Management System (BMS), ensuring continuous operation even if one channel experiences issues. This multi-channel approach provides a layer of redundancy that enhances the system's ability to withstand communication disruptions. For example, in a scenario where one communication channel is temporarily unavailable due to maintenance or external interference, the system can continue to operate using the alternative channel. This robustness ensures that critical signals, such as those related to security or building management functions, are always transmitted without interruption. By providing multiple pathways for signal transmission, the BMS can maintain consistent and reliable communication, enhancing overall system resilience and dependability.

**It** may be provided that the method comprises the feature wherein the first communication channel differs from the second communication channel in respect to at least one of the following aspects: frequency band, carrier frequency, communication range, energy efficiency, and/or communication protocol.

One of the significant technical advantages of the method is the availability of diverse communication options. By utilizing communication channels that differ in aspects such as frequency band, carrier frequency, communication range, energy efficiency, and communication protocol, the Building Management System (BMS) can adapt to various environments and operational requirements. This diversity allows the system to select the most suitable communication channels for specific situations, ensuring reliable and efficient signal transmission. For example, in a building with thick walls that may obstruct certain frequencies, the system can switch to a communication channel with a different frequency band that can penetrate the walls more effectively. This adaptability enhances the overall flexibility and robustness of the BMS, making it capable of maintaining reliable communication in a wide range of conditions.

The ability to select communication channels based on differing characteristics such as energy efficiency and communication range allows the Building Management System (BMS) to optimize performance tailored to specific operational needs. For instance, in scenarios where energy conservation is a priority, the system can choose communication channels that are more energy-efficient, extending the operational life of battery-operated devices. Conversely, in situations where long-range communication is required, the system can select channels with greater communication range to ensure that signals reach their intended destinations. This tailored approach ensures that the BMS can achieve optimal performance while balancing various factors such as energy usage, signal strength, and communication reliability. By leveraging the unique characteristics of different communication channels, the system can maintain high levels of efficiency and effectiveness.

Differentiating communication channels by frequency band or carrier frequency reduces the likelihood of interference, improving signal clarity and reliability within the Building Management System (BMS). By using channels with distinct frequency characteristics, the system can minimize the risk of overlapping signals and external interference that could disrupt communication. For example, if one communication channel operates on a frequency band that is prone to interference from nearby electronic devices, the system can switch to an alternative channel with a different frequency band that is less susceptible to such interference. This reduction in interference ensures that signals are transmitted clearly and accurately, maintaining the integrity and reliability of the BMS. By providing multiple communication pathways with distinct characteristics, the system can achieve robust and interference-free communication, enhancing overall performance and dependability.

It may be provided that the method comprises the feature wherein the status of the first signal-forwarding BMS-point of the signal route comprises a communication channel information indicating available communication channels of the first signal-forwarding BMS-point.

One of the significant technical advantages of the method is informed channel selection. By including communication channel information in the status of the first signal-forwarding BMS-point, the Building Management System (BMS) ensures that the decision BMS-point has access to detailed information about the available communication channels. This information allows the decision BMS-point to make informed decisions when selecting the most suitable channels for signal transmission. For example, if the communication channel information indicates that certain channels have better signal strength or lower interference, the decision BMS-point can prioritize those channels for sending the first signal. This informed selection process optimizes signal transmission, ensuring that signals are transmitted efficiently and accurately, maintaining high levels of performance and reliability within the BMS.

The availability of communication channel information allows the decision BMS-point to manage communication channels more effectively. By having access to real-time data about the available channels, the decision BMS-point can dynamically adjust the communication strategy to ensure reliable and efficient signal routing. For instance, if the communication channel information indicates that a particular channel is experiencing high levels of interference, the decision BMS-point can switch to an alternative channel with better conditions. This proactive management of communication channels enhances the overall reliability and robustness of the BMS, ensuring that signals are transmitted without interruption. By effectively managing communication channels, the system can maintain consistent and dependable communication, even in challenging environments.

The inclusion of communication channel information in the status of the first signal-forwarding BMS-point enhances the system's ability to adapt to changing conditions. By continuously monitoring and updating the available communication channels, the Building Management System (BMS) can respond to dynamic environments and maintain robust communication. For example, in a building with fluctuating levels of interference or varying signal conditions, the communication channel information allows the decision BMS-point to adapt its communication strategy in real-time. This adaptability ensures that the system can maintain reliable communication even as conditions change, enhancing overall performance and resilience. By providing detailed information about the available communication channels, the system can achieve high levels of adaptability and maintain effective communication under various conditions.

According to a second aspect of the present invention, it may be provided a building management system, hereinafter referred to as BMS, comprising a decision BMS-point, a plurality of signal-forwarding BMS-points, a plurality of enforcement BMS-points, and a plurality of action BMS-points. The BMS may be configured to perform the computer-implemented signal routing method according to the first aspect of the present invention.

According to a third aspect of the present invention, it may be provided a decision building management system-point, the building management system being hereinafter referred to as BMS. The decision BMS-point may be configured to determine respective statuses of a plurality of signal-forwarding BMS-points. The decision BMS-point may be configured to determine a target enforcement BMS-point configured to cause operation of a target action BMS-point. The decision BMS-point may be configured to select, based on the statuses of the signal-forwarding BMS-points and based on the target enforcement BMS-point, a signal route comprising at least a first signal-forwarding BMS-point, the signal route providing a signal path between the decision BMS-point and the target enforcement BMS-point. The decision BMS-point may be configured to send a first signal designated to the first signal-forwarding BMS-point of the signal route. The first signal may comprise an instruction for the target enforcement BMS-point. Optionally, the decision BMS-point may be configured to be used in the computer-implemented signal routing method according to the first aspect of the present invention.

According to a fourth aspect of the present invention, it may be provided the use of the decision BMS-point according to the third aspect of the present invention in the computer-implemented signal routing method according to the first aspect of the present invention.

According to a fifth aspect of the present invention, it may be provided a computer program comprising computer-readable instructions which, when executed by a data processing apparatus, preferably being the decision BMS-point according to the third aspect of the present invention, cause the data processing apparatus to perform the computer-implemented signal routing method according to the first aspect of the present invention.

All technical implementation details and advantages described with respect to the first aspect of the present invention are self-evidently mutatis mutandis applicable for the second, third, fourth and fifth aspects of the present invention and vice versa.

### BRIEF DESCRIPTION OF THE DRAWINGS

The present invention will be explained in more detail, by way of example, with reference to the drawings in which:
- Figure 1: is a second schematic overview of a signal route according to embodiments of the present invention.
- Figure 2: is a second schematic overview of a signal route according to embodiments of the present invention.
- Figure 3: is a flow chart including steps according to embodiments of the present invention.

### FIGURATIVE DESCRIPTION OF EMBODIMENTS

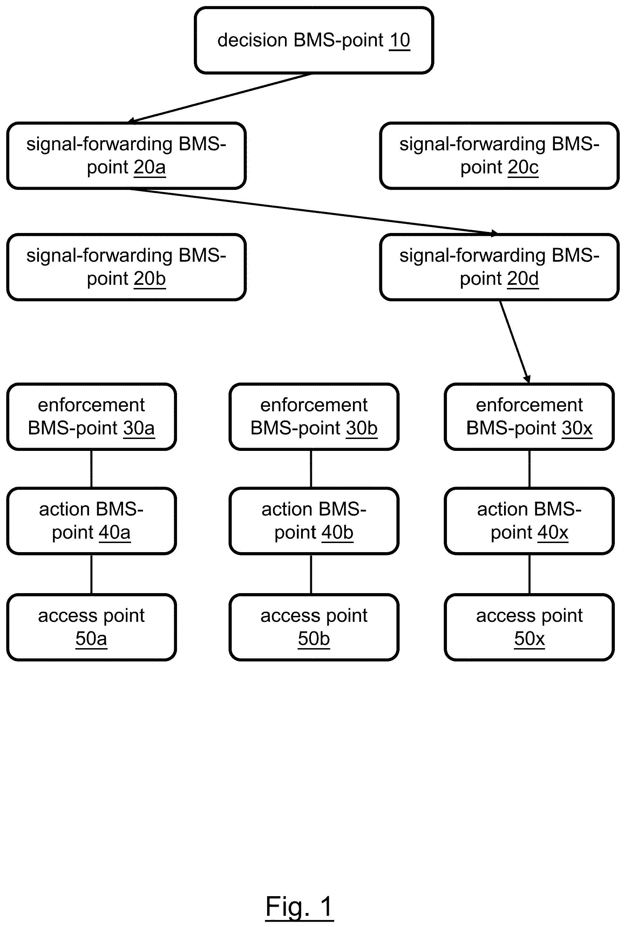

Figure 1 illustrates a scenario within the building management system (BMS) 100, where the decision BMS-point 10 has already obtained the respective statuses of the signal-forwarding BMS-points 20a, 20b, 20c, and 20d according to step S101. This serves as the starting point or initial condition for the depicted process. The figure demonstrates the routing of signals through various components of the BMS, emphasizing the interaction and decision-making process based on the statuses, such as battery levels and/or signal strength, of the signal-forwarding BMS-points.

At the outset, the decision BMS-point 10 evaluates the statuses of the signal-forwarding BMS-points 20a, 20b, 20c, and 20d. Based on this evaluation, it determines the optimal routing path for the signal. **In** this particular example, the decision BMS-point 10 directs the signal to the signal-forwarding BMS-point 20a. The signal-forwarding BMS-point 20a, upon receiving the signal, further transmits it to the next signal-forwarding BMS-point 20d. This sequential transmission continues until the signal reaches the target enforcement BMS-point 30x.

The routing decision made by the decision BMS-point 10 may be influenced by various factors, including the battery levels and signal strength of the intermediate signal-forwarding BMS-points. By selecting the most efficient path, the system ensures reliable and energy-efficient signal transmission. Once the signal reaches the target enforcement BMS-point 30x, it triggers the corresponding action BMS-point 40x. The action BMS-point 40x, in turn, performs a specific action, such as unlocking the target access point 50x. In this example, the target access point 50x could be a door that is unlocked to grant access.

The figure effectively demonstrates the hierarchical and sequential nature of signal routing within the BMS 100. It highlights the critical role of the decision BMS-point 10 in evaluating the statuses of the signal-forwarding BMS-points and making informed routing decisions. The interaction between the decision BMS-point 10, signal-forwarding BMS-points 20a, 20d, and the target enforcement BMS-point 30x underscores the system's capability to adapt to varying conditions, such as battery levels and signal strength, to maintain optimal performance.

Furthermore, the figure showcases the seamless integration of different BMS points, illustrating how the decision BMS-point 10, signal-forwarding BMS-points 20a and 20d, enforcement BMS-point 30x, action BMS-point 40x, and access point 50x work together to achieve the desired outcome. This collaborative interaction enhances the overall efficiency, reliability, and autonomy of the building management system 100.

In summary, Figure 1 provides a comprehensive visual representation of the signal routing method within the BMS 100, starting from the decision BMS-point 10, through the signal-forwarding BMS-points 20a and 20d, to the target enforcement BMS-point 30x, and finally triggering the action BMS-point 40x to unlock the target access point 50x. The figure underscores the importance of status evaluation and optimal routing decisions in ensuring the effective operation of the building management system.

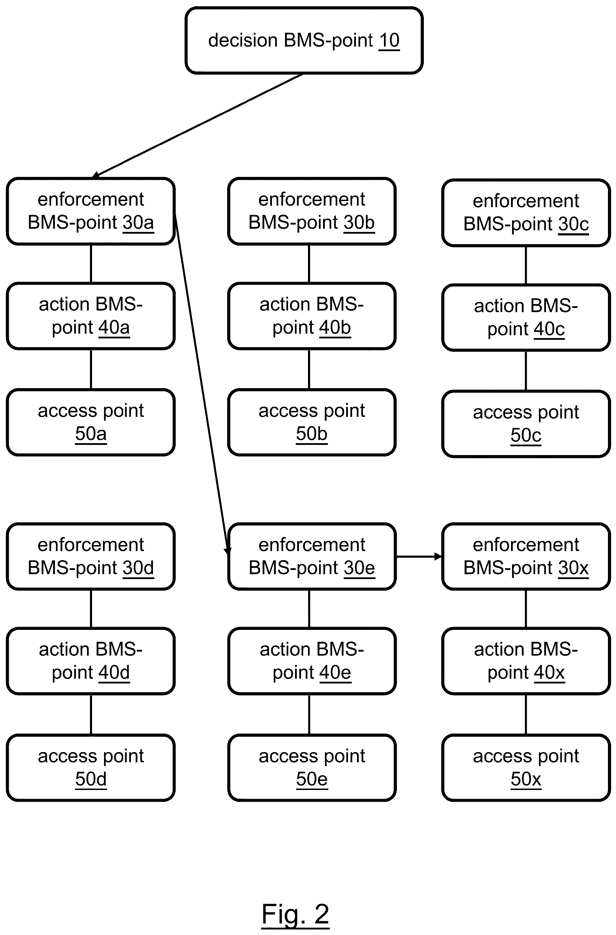

Figure 2 presents an advanced embodiment of the building management system (BMS) 100, where the roles of signal-forwarding BMS-points and enforcement BMS-points are integrated, thereby eliminating the need for distinct hardware components. This embodiment represents the most preferred configuration of the system, showcasing enhanced efficiency and flexibility.

Similar to Figure 1, the process in Figure 2 begins with the decision BMS-point 10 having already acquired the statuses of the relevant BMS-points according to step S101. This initial condition sets the stage for the subsequent signal routing and decision-making process. In this embodiment, each enforcement BMS-point is capable of functioning as a signal-forwarding BMS-point, thereby streamlining the system's architecture and reducing hardware complexity.

The figure depicts the decision BMS-point 10 initiating the signal routing process by directing a signal to the enforcement BMS-point 30a. Unlike the previous embodiment, the enforcement BMS-point 30a now also serves as a signal-forwarding BMS-point, allowing it to relay the signal further along the path. The signal is then transmitted from the enforcement BMS-point 30a to another enforcement BMS-point, 30e, which similarly acts as a signal-forwarding BMS-point in this configuration.

This sequential transmission continues until the signal reaches the target enforcement BMS-point 30x. The ability of enforcement BMS-points 30a and 30e to function as signal-forwarding BMS-points exemplifies the system's adaptability and resourcefulness. By consolidating these roles, the system reduces the need for additional hardware, thereby enhancing its overall efficiency and cost-effectiveness.

Upon reaching the target enforcement BMS-point 30x, the signal triggers the corresponding action BMS-point 40x. The action BMS-point 40x then executes a specific action, such as unlocking the target access point 50x. In this scenario, the target access point 50x could be a door that is unlocked to facilitate access.

Figure 2 effectively illustrates the streamlined and integrated nature of the BMS 100 in this preferred embodiment. It highlights the dynamic interaction between the decision BMS-point 10, enforcement BMS-points 30a, 30e, and 30x, and the action BMS-point 40x. The integration of signal-forwarding and enforcement functionalities within the same BMS-points underscores the system's capability to adapt to varying operational conditions while maintaining optimal performance.

Furthermore, the figure demonstrates the system's ability to make informed routing decisions based on the statuses of the BMS-points, such as battery levels and signal strength, ensuring reliable and energy-efficient signal transmission. The collaborative interaction between the decision BMS-point 10 and the multifunctional enforcement BMS-points enhances the overall efficiency, reliability, and autonomy of the building management system 100.

In summary, Figure 2 provides a comprehensive visual representation of the integrated signal routing method within the BMS 100, starting from the decision BMS-point 10, through the multifunctional enforcement BMS-points 30a and 30e, to the target enforcement BMS-point 30x, and finally triggering the action BMS-point 40x to unlock the target access point 50x. This embodiment highlights the advantages of integrating signal-forwarding and enforcement roles, resulting in a more efficient and streamlined building management system.

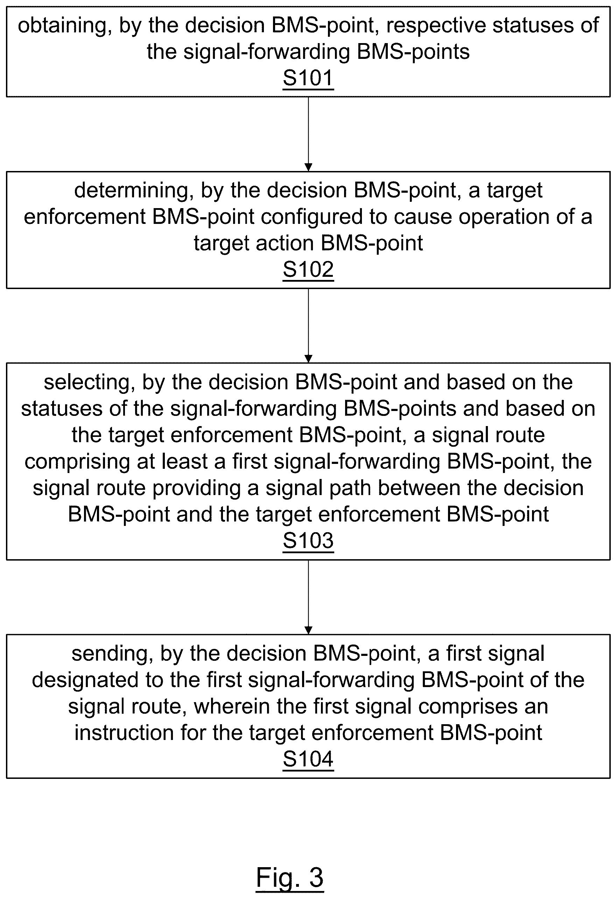

Figure 3 is a flowchart that delineates the sequential steps involved in the signal routing method according to the embodiments of the present invention within the building management system (BMS) 100. This flowchart provides a clear and structured overview of the process, illustrating the decision-making and signal transmission stages that ensure efficient and reliable operation of the BMS.

The flowchart begins with step S101, where the decision BMS-point 10 obtains the respective statuses of the signal-forwarding BMS-points 20a, 20b, 20c, and 20d, or enforcement BMS-points 30a, 30b, 30c, 30d, and 30e, depending on the embodiment. These statuses include critical parameters such as battery levels and signal strength, which are essential for making informed routing decisions.

In step S102, the decision BMS-point 10 evaluates the obtained statuses to determine the optimal routing path for the signal. This evaluation process involves comparing the statuses of the available BMS-points to identify the most efficient and reliable path for signal transmission. The decision BMS-point 10 takes into account factors like battery levels and signal strength to ensure that the chosen path minimizes energy consumption and maximizes signal integrity.

Once the optimal path is determined, step S103 involves the decision BMS-point 10 initiating the signal transmission. The signal is directed to the first BMS-point in the chosen path, which could be a signal-forwarding BMS-point or an enforcement BMS-point, depending on the system configuration. The flowchart illustrates the flexibility of the system in accommodating different embodiments, whether the BMS-points are distinct or integrated.

In step S104, the signal is forwarded along the determined path through the intermediate BMS-points. Each BMS-point in the path receives the signal and transmits it to the next BMS-point, ensuring a seamless and continuous flow of information. This step highlights the collaborative nature of the BMS-points in maintaining the integrity and efficiency of the signal transmission process.

The flowchart proceeds to step S105, where the signal reaches the target enforcement BMS-point 30x. Upon receiving the signal, the target enforcement BMS-point 30x triggers the corresponding action BMS-point 40x. This step underscores the critical role of the enforcement BMS-point in initiating the desired action based on the received signal.

Finally, in step S106, the action BMS-point 40x performs the specified action, such as unlocking the target access point 50x. This action completes the signal routing process, achieving the intended outcome of the system. The flowchart effectively demonstrates the logical progression of steps from obtaining statuses to performing the final action, providing a comprehensive overview of the signal routing method within the BMS 100.

In summary, Figure 3 offers a detailed and structured representation of the signal routing method according to the embodiments of the present invention. The flowchart outlines the sequential steps involved, starting from obtaining statuses at the decision BMS-point 10, evaluating and determining the optimal path, initiating and forwarding the signal, reaching the target enforcement BMS-point 30x, and finally triggering the action BMS-point 40x to perform the specified action. This visual representation underscores the efficiency, reliability, and adaptability of the building management system 100 in managing signal routing and achieving desired outcomes.

Reference will now be made to exemplary embodiments of the invention, examples of which are illustrated in the accompanying figures. Wherever possible, the same reference numbers will be used throughout the drawings to refer to the same or like parts. Moreover, the features explained in context of a specific embodiment, for example that one of Figure 1, also apply to any one of the other embodiments, when appropriate, unless differently described.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

**In** some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

| | |
|---|---|
| signal-forwarding BMS-point[s] | 20a, 20b, 20c, 20d |
| BMS | 100 |
| decision BMS-point[s] | 10 |
| enforcement BMS-point[s] | 30a, 30b, 30c, 30d, 30e, 30x |
| action BMS-point[s] | 40a, 40b, 40c, 40d, 40e, 40x |
| access point[s] | 50a, 50b, 50c, 50d, 50e, 50x |
| target enforcement BMS-point | 30x |
| target action BMS-point | 40x |
| target access point | 50x |

## Claims

1. A computer-implemented signal routing method for a building management system, hereinafter referred to as BMS (100), the BMS (100) preferably being an access control system;
wherein the BMS (100) comprises a decision BMS-point (10), a plurality of signal-forwarding BMS-points (20a, 20b, 20c, 20d), a plurality of enforcement BMS-points (30a, 30b, 30c, 30d, 30e, 30x) and a plurality of action BMS-points (40a, 40b, 40c, 40d, 40e, 40x), preferably each of the action BMS-points being associated with at least one of the plurality of enforcement BMS-points (30a, 30b, 30c, 30d, 30e, 30x);
wherein each enforcement BMS-point (30a, 30b, 30c, 30d, 30e, 30x) is configured to cause operation of at least one action BMS-point (40a, 40b, 40c, 40d, 40e, 40x), preferably the operation including unlocking an access point (50a, 50b, 50c, 50d, 50e, 50x);
wherein the method comprises:
obtaining (S101), by the decision BMS-point (10), respective statuses of the signal-forwarding BMS-points (20a, 20b, 20c, 20d);
determining (S102), by the decision BMS-point (10), a target enforcement BMS-point (30x) configured to cause operation of a target action BMS-point (40x);
selecting (S103), by the decision BMS-point (10) and based on the statuses of the signal-forwarding BMS-points (20a, 20b, 20c, 20d) and based on the target enforcement BMS-point (30x), a signal route comprising at least a first signal-forwarding BMS-point, the signal route providing a signal path between the decision BMS-point (10) and the target enforcement BMS-point (30x);
sending (S104), by the decision BMS-point (10), a first signal designated to the first signal-forwarding BMS-point of the signal route, wherein the first signal comprises an instruction for the target enforcement BMS-point (30x).

2. The method of claim 1, wherein the first signal comprises the signal route.

3. The method of any one of the preceding claims, wherein the obtaining respective statuses of the signal-forwarding BMS-points (20a, 20b, 20c, 20d) includes or more of:
(i) at least part, preferably all, of the plurality of signal-forwarding BMS-points (20a, 20b, 20c, 20d) send respective status signals in periodic time intervals, wherein the sending of the respective status signals is performed in response to the decision BMS-point (10) requesting the respective status signals;
(ii) the decision BMS-point (10) predicts the status, in particular the energy level, of the signal forwarding BMS-points, preferably during time periods when no status signal from the respective signal forwarding BMS-points is received;
(iii) the decision BMS-point (10) interprets an absence of status signals of a respective signal forwarding BMS-point for a period of time exceeding a threshold as an indication of a malfunction of the respective signal forwarding BMS-point.

4. The method of any one of the preceding claims, wherein the BMS (100) is configured to interact with an authentication medium, optionally being a mobile device or a physical key card, wherein the method comprises:
receiving, by the decision BMS-point (10) from authentication device, a request, wherein the request includes an indication of a user's intent to operate a target action BMS-point (40x) and/or includes an authentication information;
determining, by the decision BMS-point (10) and based on the request, the first signal;
wherein optionally, prior to sending the first signal, a validity of the authentication information is determined by the decision BMS-point (10), and wherein sending the first signal is only performed upon determining that the authentication information is valid.

5. The method of any one of the preceding claims,
wherein the method comprises maintaining, by the decision BMS-point (10), a list of the statuses,
wherein the method comprises updating, by the decision BMS-point (10), the list based on at least one of the following:
- receiving a status signal related to the statuses,
- previous operations of sending the first signal to the first signal-forwarding BMS-point of the signal route, an optionally the success/failure thereof;
optionally, wherein the signal route for a specific target enforcement BMS-point is
periodically changed in order to not drain energy levels of signal forwarding BMS-points, the energy levels being part of the statuses.

6. The method of any one of the preceding claims,
wherein each signal-forwarding BMS-point (20a, 20b, 20c, 20d) comprises an energy storage,
wherein the statuses comprise a respective stored energy information indicating a level of energy stored in the respective signal-forwarding BMS-point (20a, 20b, 20c, 20d),
wherein the decision BMS-point (10) selects the signal route based on the stored energy information of the signal-forwarding BMS-points (20a, 20b, 20c, 20d).

7. The method of any one of the preceding claims,
wherein each signal forwarding BMS-point comprises energy harvesting means,
wherein the method comprises harvesting energy, by the energy harvesting means, and providing the harvested energy to the signal-forwarding BMS-point (20a, 20b, 20c, 20d),
wherein preferably, the energy harvesting means comprise a solar cell and/or a motion-energy based energy generator,
wherein preferably, each signal-forwarding BMS-point (20a, 20b, 20c, 20d) is not connected to a power grid.

8. The method of any one of the preceding claims,
wherein the method further comprises:
receiving, by the first signal-forwarding BMS-point of the signal route, the first signal, and
performing signal forwarding, which includes sending, by the first signal-forwarding BMS-point, a second signal based on the first signal, the second signal comprising the instruction for the target enforcement BMS-point (30x).

9. The method of claim 8, wherein the first signal comprises designation information indicating the first signal-forwarding BMS-point and/or a designated receiver of the second signal.

10. The method of any one of claims 8-9, wherein sending the second signal is performed under the condition that no other signal corresponding to the first signal was received by the first signal-forwarding BMS-point within a predetermined time period before receiving the first signal.

11. The method of any one of claims 8-10, wherein the method further comprises:
receiving, by the target enforcement BMS-point (30x), the second signal, and
causing, by the target enforcement BMS-point (30x), operation of the target action BMS-point (40x) according to the instruction of the second signal,
wherein preferably, the target action BMS-point (40x) comprises an actuator and a lock.

12. The method of any one of the preceding claims, wherein each enforcement BMS-point (30a, 30b, 30c, 30d, 30e, 30x) is also a signal forwarding BMS-point and each signal forwarding BMS-point is also an enforcement BMS-point (30a, 30b, 30c, 30d, 30e, 30x).

13. The method of any one of the preceding claims,
wherein each enforcement BMS-point (30a, 30b, 30c, 30d, 30e, 30x) and/or each signal forwarding BMS-point is operable in a low-power mode and in an active mode,
wherein each enforcement BMS-point (30a, 30b, 30c, 30d, 30e, 30x) and/or signal forwarding BMS-point being in the low-power mode is configured to operate at a lower power consumption as compared to a power consumption of the respective enforcement BMS-point (30a, 30b, 30c, 30d, 30e, 30x) and/or signal forwarding BMS-point being in the active mode,
wherein each enforcement BMS-point (30a, 30b, 30c, 30d, 30e, 30x) and/or signal forwarding BMS-point comprises a wakeup receiver configured to receive a wakeup signal and an action instruction receiver configured to receive an action instruction signal,
wherein in the low-power mode of the enforcement BMS-point (30a, 30b, 30c, 30d, 30e, 30x) and/or signal forwarding BMS-point, the action instruction receiver is inactive, and wherein in the active mode, the action instruction receiver is active,
wherein the instruction of the first signal comprises a wakeup instruction for the target enforcement BMS-point (30x).

14. The method of claim 13, wherein the method comprises:
receiving, by the wakeup receiver of the target enforcement BMS-point (30x) being in the low-power mode, the wakeup instruction,
in response to receiving the wakeup instruction, switching the target enforcement BMS-point (30x) from the low-power mode into the active mode.

15. The method of any one of claims 13-14, wherein the method comprises:
after sending the first signal and preferably after expiry of a waiting time: sending, by the decision BMS-point (10), an action instruction signal, wherein the action instruction signal comprises an instruction for the target enforcement BMS-point (30x) to cause an operation of the target action BMS-point (40x),
wherein the active action instruction receiver of the target enforcement BMS-point (30x) being in the active mode is configured to receive the action instruction signal, and to cause operation of the target action BMS-point (40x) according to the instruction of the action instruction signal.

16. The method according to claim 15,
wherein each enforcement BMS-point (30a, 30b, 30c, 30d, 30e, 30x) comprises a transmitter configured to send an instruction request signal,
wherein the method comprises, after switching the target enforcement BMS-point (30x) from the low-power mode into the active mode:
sending, by the transmitter of the target enforcement BMS-point (30x) being in the active mode, an instruction request signal to the decision BMS-point (10),
wherein the action instruction signal is sent by the decision BMS-point (10) upon receipt of the instruction request signal.

17. The method of any one of the preceding claims,
wherein one of the signal-forwarding BMS-points (20a, 20b, 20c, 20d) comprises the target enforcement BMS-point (30x),
wherein optionally, each enforcement BMS-point (30a, 30b, 30c, 30d, 30e, 30x) is comprised in a signal-forwarding BMS-point (20a, 20b, 20c, 20d).

18. The method of any one of the preceding claims,
wherein the decision BMS-point (10) is configured to send the first signal via a first communication channel and via a second communication channel,
wherein each signal-forwarding BMS-point (20a, 20b, 20c, 20d) is configured to receive the first signal via the first communication channel and via the second communication channel,
wherein the method comprises:
selecting, by the decision BMS-point (10) and based on the status of the first signal-forwarding BMS-point of the signal route, at least two communication channels, for sending the first signal,
wherein the first signal is sent by the decision BMS-point (10) via the selected at least two communication channels.

19. The method of claim 18, wherein the first communication channel differs from the second communication channel in respect to at least one of the following aspects: frequency band, carrier frequency, communication range, energy efficiency, and/or communication protocol.

20. The method of any one of claims 18-19, wherein the status of the first signal-forwarding BMS-point of the signal route comprises a communication channel information indicating available communication channels of the first signal-forwarding BMS-point.

21. A building management system, hereinafter referred to as BMS (100), comprising a decision BMS-point (10), a plurality of signal-forwarding BMS-points (20a, 20b, 20c, 20d), a plurality of enforcement BMS-points (30a, 30b, 30c, 30d, 30e, 30x) and a plurality of action BMS-points (40a, 40b, 40c, 40d, 40e, 40x), wherein the BMS (100) is configured to perform the computer-implemented signal routing method according to any one of claims 1 to 20.

22. A decision building management system-point, the building management system being hereinafter referred to as BMS (100),
wherein the decision BMS-point (10) is configured to determine respective statuses of a plurality of signal-forwarding BMS-points (20a, 20b, 20c, 20d),
wherein the decision BMS-point (10) is configured to determine a target enforcement BMS-point (30x) configured to cause operation of a target action BMS-point (40x),
wherein the decision BMS-point (10) is configured to select, based on the statuses of the signal-forwarding BMS-points (20a, 20b, 20c, 20d) and based on the target enforcement BMS-point (30x), a signal route comprising at least a first signal-forwarding BMS-point, the signal route providing a signal path between the decision BMS-point (10) and the target enforcement BMS-point (30x),
wherein the decision BMS-point (10) is configured to send a first signal designated to the first signal-forwarding BMS-point of the signal route,
wherein the first signal comprises an instruction for the target enforcement BMS-point (30x),
wherein optionally, the decision BMS-point (10) is configured to be used in the computer-implemented signal routing method according to any one of claims 1 to 20.

23. Use of the decision BMS-point (10) according to claim 22 in the computer-implemented signal routing method according to any one of claims 1 to 20.

24. A computer program comprising computer-readable instructions which when executed by a data processing apparatus, preferably being the decision BMS-point (10) according to claim 22, cause the data processing apparatus to perform the computer-implemented signal routing method according to any one of claims 1 to 20.
